# EUROPEAN PATENT APPLICATION

(11) **EP 4 782 650 A1**
(43) Date of publication of application: **29.07.2026**
(21) Application number: 25153508.4
(22) Date of filing: 23.01.2025
(51) Int. Cl.: E21B 31/18, E21B 31/12

(54) **DOWNHOLE TOOL**

(71) Applicant: Welltec A/S, 3450 Allerød (DK)
(72) Inventor: Ibragimov, Alexander, 3450 Allerød (DK)
(74) Representative: Dragsted Partners A/S

(57) **Abstract**

The present invention relates to a fishing tool (100) comprising at least two claws (110) configured for externally gripping a fish (200) located downhole, and a moveable element (120) connected to at least one of the claws and reciprocally moveable between a first position corresponding to a fully open position of the claws and a second position corresponding to a fully closed position of the claws. The invention also relates to a method for providing a fishing tool and a method for operating a fishing tool.

## Description

The present invention relates to a downhole tool and more precisely to a downhole tool configured to grip a fish located downhole. The invention also relates to a method for providing a fishing tool and a method for operating a fishing tool.

Downhole tools have been developed for fishing purpose. Within the context of this application, a fish is any object left downhole. For example, a fish may consist of junk metal, a hand tool, a length/part of a drill pipe or drill collars, an intervention tool, a straddle, a plug, or an MWD tool and a directional drilling package. A fish may in other examples be a piece of a wireline, etc. Once the component is lost, it is properly referred to as simply "the fish". A fish is thus anything put into the hole which may be accurately measured and sketched, so that appropriate fishing tools can be selected if the item has to be fished out of the hole.

Existing fishing tools are lowered downhole until they reach the position of the fish. Upon engagement, the fishing tool may be withdrawn from the wellbore, thus carrying the fish to the surface.

While existing fishing tools have proven useful, properly engaging the fish can be challenging, leading to unsuccessful engagement attempts.

From the above it is understood that there is room for improvements.

It is an object of the present invention to wholly or partly overcome the above disadvantages and drawbacks of the prior art. More specifically, it is an object to provide a new type of fishing tool which has been improved over prior art and which eliminates or at least mitigates the drawbacks discussed above. More specifically, an object of the invention is to provide a fishing tool with an external gripping mechanism that allows multiple gripping attempts when arranged downhole. These objects are achieved by the technique set forth in the appended independent claims with preferred embodiments defined in the dependent claims related thereto.

The above objects, together with numerous other objects, advantages and features, which will become evident from the below description, are accomplished by a solution in accordance with the present invention by a fishing tool comprising at least two claws or grapples configured for externally gripping a fish located downhole, and a moveable element connected to at least one of the claws and reciprocally moveable between a first position corresponding to a fully open position of the claws or grapples The fishing tool further comprises an electric actuator connected to the moveable element and configured to move the moveable element reciprocally moveable between a first position corresponding to a fully open position of the claws and a second position corresponding to a fully closed position of the claws or grapples. This is advantageous since it allows for multiple gripping attempts when arranged downhole, which enhances operational efficiency. Further, electric actuation provides precise control of the moveable element and thereby the claw movements.

Moreover, the moveable element may be an axially moveable element, and the first and second positions may be axial positions. This is advantageous since axial movement allows for straightforward control and precise adjustment of the claw or grapple positions.

Also, the fishing tool may comprise two claws or grapples. Each claw or grapple may be connected to a center point of the moveable element. This is advantageous as it simplifies design and provides a balanced force distribution and stable gripping with increased gripping force.

Furthermore, the fishing tool may comprise three claws or grapples. Each claw or grapple may be connected at an offset distance from a center point of the moveable element. This is advantageous since a symmetrical and secure gripping can be achieved, especially for irregularly shaped fishes.

In addition, each position of the moveable element between the first position and the second position may correspond to a degree of closure of the claws. This is advantageous since it allows for precise control of the grippers using the moveable element.

Further, the fishing tool may also comprise a sensor configured to determine whether the claws or grapples have gripped the fish or not based on the position of the moveable element. This is advantageous since accurate feedback on grip status can enhance the reliability, safety and operational efficiency.

Furthermore, the sensor may be a position sensor or a displacement sensor, such as a linear potentiometer, a rotary potentiometer, hall-effect sensor array, or a magnetic field sensor. The sensor may comprise a first sensor element in the form of a metallic element, such as a rod, which passes through or past a second sensor element in the form of a magnet, e.g. a ring magnet.

Moreover, the sensor may be arranged to determine the position of the moveable element directly on the moveable element or on one or more keys connected to the moveable element. This is advantageous since the claw or grapple positions can be determined in a simple, reliable and accurate way.

Also, the fishing tool may be configured to be connected to a wireline. This is advantageous since wireline connectivity facilitates easy deployment and retrieval in downhole environments and can be used to provide power to the fishing tool.

In addition, the electric actuator may be an electric rotary motor, and the moving element may be connected by a rotary-to-linear converter, preferably in the form of a screw-and-nut mechanism. This is advantageous since the conversion mechanism allows for efficient translation of rotary motion into linear motion, facilitating controlled claw operation.

Further, the sensor may be configured to determine the position of the moveable element by measuring a rotational position of the electric rotary motor or of a rotating shaft connected to the electric rotary motor. This is advantageous since rotational measurement offers high precision in tracking the position of the moveable element.

Moreover, the electric actuator may be configured to receive power from a wireline connected to the fishing tool and/or a battery arranged in the fishing tool. This is advantageous since the fishing tool can be efficiently powered.

Also, the moveable element may be biased towards the first position or towards the second position. This is advantageous since biasing ensures the tool defaults to a known state, enhancing safety and readiness for operation.

Moreover, the invention relates to a method for providing a fishing tool comprising providing an electric actuator, providing a moveable element being reciprocally moveable within the fishing tool between a first position and a second position, and connecting at least two claws or grapples to the moveable element such that the claws or grapples are configured for externally gripping a fish and be in a fully open position when the moveable element is in the first position and in a fully closed position when the moveable element is in the second position by means of the electric actuator. This is advantageous since a fishing tool allowing for multiple gripping attempts when arranged downhole can be provided.

Finally, the invention relates to a method for operating a fishing tool comprising providing any fishing tool described herein, externally gripping a downhole fish with the fishing tool, and extracting the fishing tool and the externally gripped fish from downhole. This is advantageous since objects can be efficiently and reliably retrieved from downhole environments.

The invention and its many advantages will be described in more detail below with reference to the accompanying schematic drawings, which for the purpose of illustration show some non-limiting embodiments and in which:
Fig. 1 is a schematic view of a borehole with a fishing tool approaching a fish, according to one example,
Fig. 2a is a perspective view of a fishing tool in an open configuration, according to one example,
Fig. 2b is a side view of the fishing tool in Fig. 2a in the open position,
Fig. 2c is a side view of the fishing tool shown in Figs. 2a-b in a closed position,
Fig. 3 is a step-by-step illustration of a fishing tool attempting to grip a fish, according to one example,
Fig. 4 is a combined front view and cross-sectional side view of parts of a fishing tool in a closed, semi-closed and open position, according to one example,
Fig. 5 is a front view of a fishing tool in a closed and open position according to one example,
Fig. 6 is a cross-sectional view of a fishing tool arranged in an open and closed position, respectively, according to one example,
Fig. 7 is a schematic flow chart of a method for providing a fishing tool according to an embodiment, and
Fig. 8 is a schematic flow chart of a method for operating a fishing tool according to an embodiment

All the figures are highly schematic and not necessarily to scale, and they show only those parts which are necessary in order to elucidate the invention, other parts being omitted or merely suggested.

Hereinafter, certain embodiments will be described more fully with reference to the accompanying drawings. The invention may, however, be embodied in many different forms and should not be construed as limited to the embodiments set forth herein; rather, these embodiments are provided by way of example so that this disclosure will be thorough and complete, and will fully convey the scope of the invention, such as it is defined in the appended claims, to those skilled in the art.

The term "coupled" is defined as connected, although not necessarily directly, and not necessarily mechanically. Similarly, the term "connected", or "operatively connected", is defined as connected, although not necessarily directly, and not necessarily mechanically. Two or more items that are "coupled" or "connected" may be integral with each other. The terms "a" and "an" are defined as one or more unless this disclosure explicitly requires otherwise. The terms "substantially", "approximately" and "about" are defined as largely, but not necessarily wholly what is specified, as understood by a person of ordinary skill in the art. The terms "comprise" (and any forms thereof), "have" (and any forms thereof), "include" (and any form thereof) and "contain" (and any forms thereof) are open-ended linking verbs. As a result, a method that "comprises", "has", "includes" or "contains" one or more steps, possesses those one or more steps, but is not limited to possessing only those one or more steps.

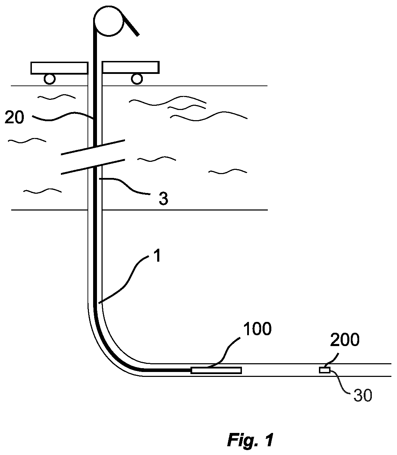

Starting in Fig. 1, a drilled well 1 is shown. The well 1 consists of a drilled hole 3 leading down into the bedrock to extract gas and/or oil. The well 1 may be reinforced and/or cased or lined as is well-known in the art.

Fig. 1 also shows a fishing tool 100 submerged in the well 1.

The fishing tool 100 is configured to externally grip a fish 200 left downhole.

The fishing tool 100 is connected to a wireline 20, i.e. a cable adapted to guide the fishing tool 100 up and down the well 1. The wireline 20 is attached to the fishing tool 100 at one end, while the other end of the wireline 20 is connected to some equipment 30 above the well 1. In this way, the position of the fishing tool 100 in the well can be controlled by manoeuvring the wireline 20.

In addition to mechanically guiding the fishing tool 100, the wireline 20 may be electrically coupled to the fishing tool 100 so that the fishing tool 100 can be powered via the wireline 20. The wireline 20 thus provides the fishing tool 100 with the necessary power so that the fishing tool 100 can perform its intended fishing operation downhole. Alternatively or additionally, the fishing tool 100 may be powered by a battery 150 comprised in the fishing tool 100.

In the shown example, the wireline 20 forms a running structure used to drive the fishing tool 100 up and down the borehole 3. It should, however, be realized that the running structure 20 may be implemented in many different ways, such as by a coiled tubing, etc.

The fishing tool 100 may be a solitary component connected to the wireline 20, or it may form a portion of a larger tool string comprising one or more additional downhole tools such as tractors, intervention tools, measurement tools, etc.

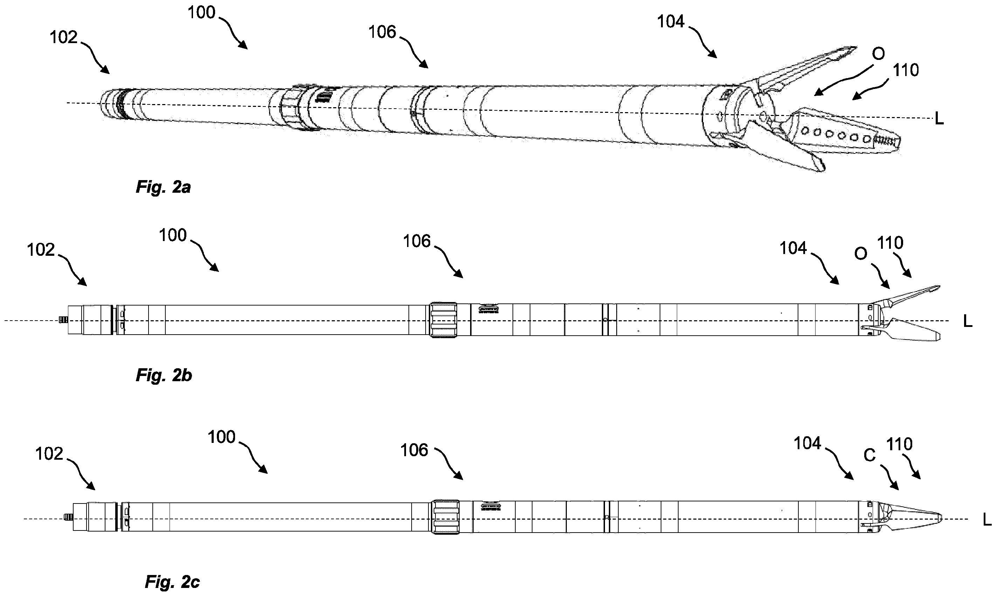

Figs. 2a-2c show the fishing tool 100 in further detail. The fishing tool 100 has a drive end 102 configured to be arranged closest to the surface during operation, and an engagement end 104 configured to be arranged closest to the fish 200 during operation. Hence, the drive end 102 is a proximal end, while the engagement end 104 is a distal end. The end of the fishing tool 100 where the drive end 102 is located is sometimes referred to as a rear end, and the end where the engagement end 104 is located is sometimes referred to as a front end.

Typically, the drive end 102 is configured to be in direct connection with the running structure 20, or it may be indirectly connected to the running structure 20 via one or more downhole tools such as tractors, etc.

A support body 106 extends between the drive end 102 and the engagement end 104. The support body 106 may form a housing 160 encasing various components of the fishing tool 100. The length of the support body 106 may be of any suitable magnitude, but preferably the support body 106 is as short as possible while still providing an axial length required to accommodate various functions of the fishing tool 100, as will be described later.

A plurality of grapples or claws 110, in this case three grapples or claws 110, are arranged at the engagement end 104 of the fishing tool 100. The claws 110 project at least partially along a longitudinal axis L of the fishing tool 100. The claws 110 are configured to pivot in relation to the longitudinal axis L of the fishing tool 100 between a fully open position O and a fully closed position C, as illustrated in Figs. 2b-c. Typically in the closed position C, at least the tips of the claws 110 are in contact with one another. In the open position O, the tips of the claws 110 are further away from each other than in the closed position C. The fully open/fully closed positions O, C refer to positions in which the claws 110 are maximally opened/closed. The claws 110 can also be in a partly closed/open position between the fully closed and fully open positions O, C. When attempting to grip a fish 200, the claws pivot in a direction from the open position O towards the closed position C, such that the fish 200 can be caught between the claws 110.

Sometimes, the fishing operation aims at fishing a wireline or a similar line lost in the well, and when fishing such line the claws 110 just need to be tangled into the tangled line and need not necessarily grip fully around it. A fishing line/wireline using a fishing tool having only two claws has proven more efficient as the tool can engage the line in a decentralised position in the casing because three claws will seek toe centralise the tool, and in a decentralised position the claws are therefore more successful in engaging the tangled line and thus pulling it out of the well.

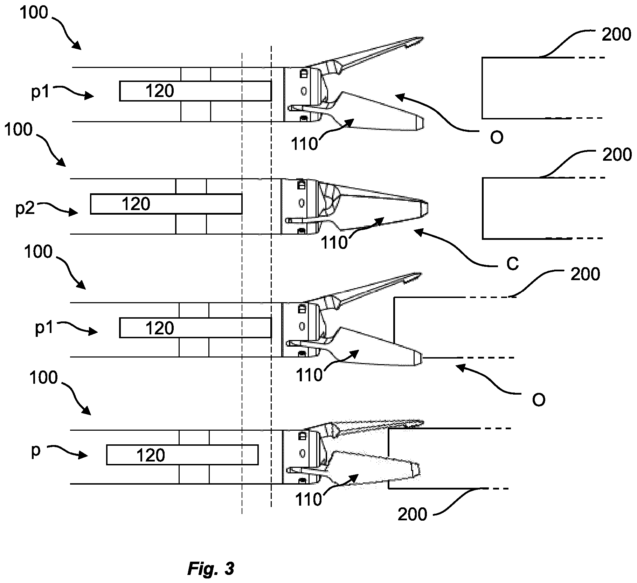

Fig. 3 illustrates the gripping process of the fishing tool 100 in further detail by showing a failed gripping attempt followed by a successful gripping attempt. First, the fishing tool 100 approaches the fish 200 while in an open position O. When the fishing tool 100 reaches the fish 200, a gripping attempt is made by initiating a closing of the claws 110. If the fishing tool 100 does not manage to grip the fish 200, the claws 110 will end up in the fully closed position C. Another gripping attempt may then be performed by opening the claws 110 again and attempting to close them around the fish 200. When the fish 200 has been successfully caught, the claws 110 will typically be in a partially closed position tightly gripping the fish 200. Since the claws 110 can be reciprocally moved between the open and closed position O, C, more than one gripping attempt can be performed successively until the fish 200 has been successfully caught. Upon proper engagement with the fish 200, the fishing tool 100 can be pulled up, thereby bringing the fish 200 to the surface.

The fishing tool 100 can be configured such that the dimensions of the gap formed between the claws 110 in the fully open position O is greater than the fish 200, such that the claws 110 are capable of externally gripping the fish 200.

Opening and/or closing of the claws 110 is controlled by a moveable element 120 connected to at least one of the claws 110. The moveable element 120 is moveable back and forth within the fishing tool 100 between a first position p1 corresponding to the fully open position O of the claws 110 and a second position p2 corresponding to a fully closed position C of the claws 110. In this example, the moveable element 120 is an axially moveable element 120 and the first and second positions p1, p2 are relative axial positions of the moveable element 120 within the fishing tool 100. The axially moveable element 120 can move back and forth along the longitudinal axis L (shown in Figs. 2a-c) of the fishing tool 100. Movements and positions of the moveable element 120 described herein refers to relative movements and positions in relation to other parts of the fishing tool 100, such as the support body 106 of the fishing tool 100.

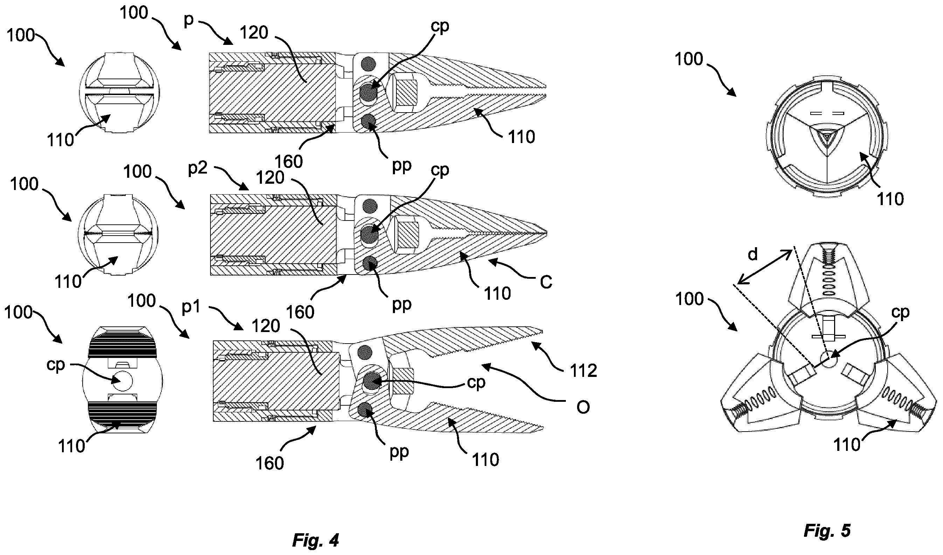

The claws 110 and the axially moveable element 120 are connected such that an axial movement of the axially moveable element 120 translates to a rotational movement of the claws 110. How this can be achieved will be described later in reference to Figs. 4-6. In the shown examples, all claws 110 are connected to the moveable element 120 and pivot to achieve opening/closing. However, it is also possible for one or more of the claws 110 to be stationary while the other(s) pivot(s) to achieve opening/closing. Such stationary claw(s) 110 may be integral with the body 106 of the fishing tool 100.

The position of the moveable element 120 and the position of the claws 110 mutually correspond to one another, meaning that each position p between the first and second positions p1, p2 of the moveable element 120 corresponds to a specific degree of closure of the claws 110. The degree of closure may be expressed as a percentage of closure, wherein the claws 110 are defined as being 100% closed in the fully closed position C, 0% closed in the fully open position O, 50% closed halfway between the fully closed and fully open position O, C, etc. Alternatively, the degree of closure may be expressed as an angle between each claw 110 and the longitudinal direction L, which generally increases as the claws 110 open and decreases as the claws close. Regardless, a current position p of the moveable element 120 may be used to determine how open/closed the claws 110 currently are.

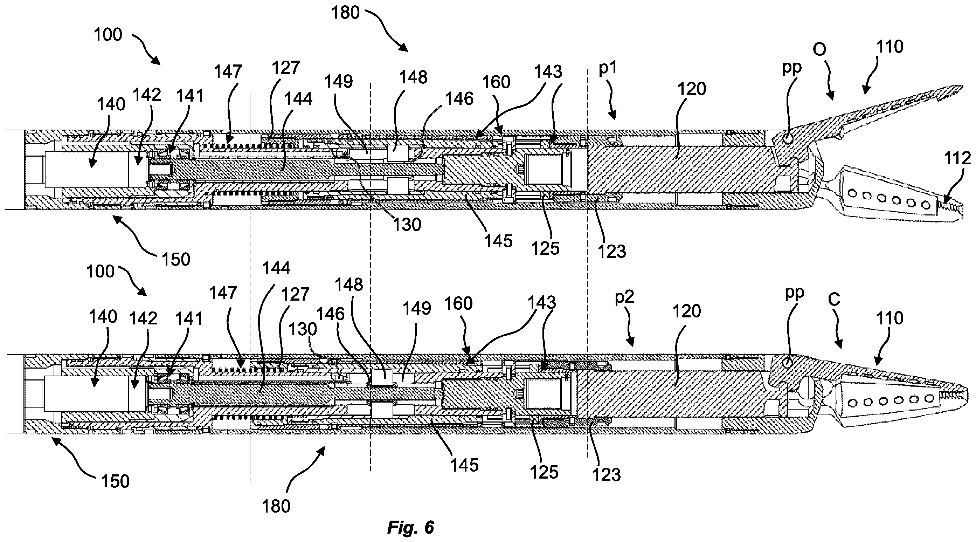

Accordingly, a sensor 130 (indicated in Fig. 6) can be arranged to measure a current position p of the moveable element 120, either directly or indirectly. Based on this, a degree of closure of the claws 110 can be calculated and used to determine whether the claws 110 have successfully gripped the fish 200 or wireline or not. If the claws 110 are fully closed C after a gripping attempt, the fish 200 or wireline has most likely not been caught, and a new attempt can be initiated. The position p of the moveable element 120 can be determined directly on the moveable element 120 or on one or more components connected to the moveable element 120.

The first position p1 of the moveable element 120 may be a front position in which the moveable element 120 is closer to the claws 110 than in the second position p2. The moveable element 120 can be configured to move continuously between the first and second positions p1, p2.

Fig. 4 shows combined front and side views of a fishing tool 100 with two claws 110 in a semi-closed, fully closed C and fully open O position. Each claw 110 is pivotably connected/attached to the moveable element 120 at a center point cp of the moveable element 120. The center point cp of the moveable element 120 is located along a longitudinal centerline of the moveable element 120 and/or the fishing tool 100, and preferably close to or at the front of the moveable element 120, i.e. the side closest to the claws 110. The center point cp of the moveable element 120 may be intersected by a pivot shaft, arranged centrally and extending in a transverse direction. By having two claws 110 engaged and moved via a common centre point cp, the overall outer diameter of the tool can be reduced without reducing the gripping force of the claws 110 compared to the solution shown in Fig. 6.

Each claw 110 is further pivotably attached/connected to the body 160 of the fishing tool 100 at respective pivot points pp. When the moveable element 120, and accordingly the center point cp, is moved back and forth, the claws 110 are forced to pivot around the pivot points pp, thus achieving opening/closing of the claws 110. Accordingly, when the moveable element 120 moves towards the first position p1, the center point cp to which the claws 110 are connected is pushed forward such that the claws 110 pivot outwards around their respective pivot points pp. When the moveable element 120 is in the second position p2, the center point cp to which the claws 110 are connected may be located along an axis formed by connecting the pivot points pp of the claws 110.

The connection between the moveable element 120 and the claws 110 can limit the axial movement of the moveable element 120, preventing it from moving beyond the first position p1 and/or the second position p2. Further, the moveable element 120 may be prevented from moving in other directions by the body 160 of the fishing tool 100.

s claws 110 the fishing tool 100 comprises, the claws 110 can be provided with grooves or teeth 112 in order to create a robust engagement with the fish 200.

Fig. 5 shows front views of a fishing tool 100 with three claws 110 in the open and closed position O, C. Each claw 110 is connected/attached to the moveable element 120 at a fixed offset distance d from the center point cp of the moveable element 120. The claws 110 are also pivotably connected/attached to the body 160 of the fishing tool. Accordingly, when the moveable element 120 is moved back and forth, the claws 110 are forced to pivot around their pivot points (not shown), thus achieving opening/closing of the claws 110.

Fig. 6 shows cross-sectional side views of the fishing tool 100 according to one embodiment, in an open position O and a closed position C, respectively. The fishing tool 100 comprises an electric actuator 140 connected to and configured to move the moveable element 120. In this case, the electric actuator 140 is an electric rotary motor 140. The electric rotary motor 140 can be functionally connected to a gear 142, which changes the rotational output speed of the motor 140. The gear 142 can in turn connect to a drive shaft 144 such that a torque output from the motor 140 causes the drive shaft 144 to rotate. The drive shaft 144 is supported by bearings 141. A sensor 130 is provided as an integral part of the motor 140. By having the electric actuator 140, several fishing attempts can be made compared to known fishing tools where the gripping elements are springloaded, giving only one attempt downhole, which, if unsuccessful, entails that the tool needs to be pulled out of the well, and the spring needs to be reloaded before the tool can perform a second attempt. By having the sensor 130, successful fishing can be confirmed before the tool is pulled out of the well. If the sensor measurements indicate that the claws 110 do not have a firm grip on the fish or wireline, other attempts can be initiated by the electric actuator 140 until the sensor measurements confirm a satisfying grip on the fish or wireline.

A drive nut 146 is arranged on a threaded portion of the drive shaft 144, forming a rotation-to-linear converter 180 that converts the rotary movement of the drive shaft 144 into a linear movement. Accordingly, when the drive shaft 144 rotates, the drive nut 146 moves in an axial direction parallel to the longitudinal axis L of the fishing tool 100.

The drive nut 146 is prevented from rotating with the drive shaft 144 by one or more keys 148 connected to the drive nut 146. The keys 148 are positioned in slots 149 or in/around other guides 149 extending in parallel to the longitudinal axis L of the fishing tool 100, thereby preventing the drive nut 146 from rotating. The key(s) 148 move(s) axially along with the drive nut 146 and transmit(s) a linear force to a cylinder 145 which in turn pushes an activating sleeve 125 (to the right in Fig. 6). The activating sleeve 125 pushes a sleeve 143, causing the sleeve 143 to move the moveable element 120. The sleeve 143 is in turn connected to the moveable element 120 by a connector 123, such that a linear force is transmitted from the sleeve 143 to the moveable element 120 in order to open the claws/grapples 110. To close the claws/grapples 110, the force from the cylinder 145 is applied in the opposite direction (i.e. to the left in Fig. 6) through the keys 148 and a stop nut 127 to the sleeve 125.

A spring 147 can be arranged to bias the moveable element 120 towards the first or second position p1, p2. The spring 147 can be arranged around the shaft 144 and be connected to the activating sleeve 125 connected to the moveable element 120.

The range of axial motion of the components can be limited by the stop nut 127, which is used to transfer force to the moveable element 120 to close the claws/grapples 110.

The sensor 130 may be configured to measure the axial position of the moveable element 120 and/or the axial position of the key(s) 148 either directly or indirectly. Hence, from the sensor measurements it is possible to accurately determine the position of the moveable element 120, i.e. if the fishing tool 100 is in an open position O or in a closed position C, or anywhere between these positions.

Starting at the bottom view of Fig. 6, showing the fishing tool 100 in a closed position C, the moveable element 120 is arranged at its end position corresponding to an innermost position. When it is desired to open the fishing tool 100 to allow for engagement, the electric actuator 140 is activated. Such activation causes the rotational shaft 144 to rotate, thereby driving the nut 146 forward. The key(s) 148 will be subject to a corresponding axial motion, thereby pushing the cylinder 145 forward. The cylinder 145 will also push the sleeve 143 through the activating sleeve 125 forward up to an end position. The sleeve 143, which also connects to the moveable element 120, controls the opening action of the claws 110.

It should be noted that the electric actuator 140 may, in some embodiments, be replaced by other types of actuators, such as hydraulic or electromechanical actuators.

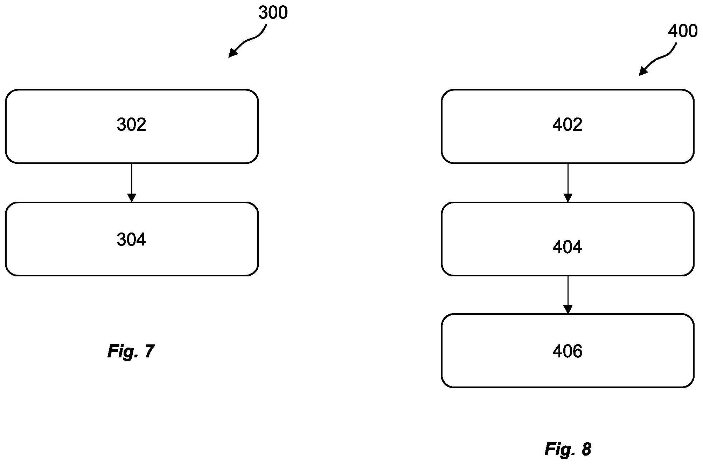

In Fig. 7, a method 300 for providing a fishing tool 100 is schematically illustrated. The method 300 comprises 302 providing a moveable element 120 being moveable back and forth within the fishing tool 100 between a first position p1 and a second position p2, and connecting 304 at least two claws 110 to the moveable element 120 such that claws 110 are configured for externally gripping a fish 200 and be in a fully open position O when the moveable element 120 is in the first position p1 and in a fully closed position C when the moveable element 120 is in the second position p2.

In Fig. 8, a method 400 for operating a fishing tool 100 is schematically illustrated. The method comprises providing 402 the fishing tool 100 according to the method 300, externally gripping 404 a downhole fish 200 with the fishing tool 100, and extracting 406 the fishing tool 100 and the externally gripped fish 200 from downhole.

A stroking tool is a tool providing an axial force. The stroking tool comprises an electric motor for driving a pump. The pump pumps fluid into a piston housing to move a piston acting therein. The piston is arranged on the stroker shaft. The pump may pump fluid out of the piston housing on one side and simultaneously suck fluid in on the other side of the piston.

By "fluid" or "well fluid" is meant any kind of fluid that may be present in oil or gas wells downhole, such as natural gas, oil, oil mud, crude oil, water, etc. By "gas" is meant any kind of gas composition present in a well, completion or open hole, and by "oil" is meant any kind of oil composition, such as crude oil, an oil-containing fluid, etc. Gas, oil and water fluids may thus all comprise other elements or substances than gas, oil and/or water, respectively.

By "annular barrier" is meant an annular barrier comprising a tubular metal part mounted as part of the well tubular metal structure and an expandable metal sleeve surrounding and connected to the tubular metal part defining an annular barrier space.

The expandable sleeve of the annular barrier may be an expandable metal sleeve.

By "casing" or "well tubular metal structure" is meant any kind of pipe, tubing, tubular, liner, string, etc., used downhole in relation to oil or natural gas production.

In the event that the tool is not submergible all the way into the casing, a downhole tractor can be used to push the tool all the way into position in the well. The downhole tractor may have projectable arms having wheels, wherein the wheels contact the inner surface of the casing for propelling the tractor and the tool forward in the casing. A downhole tractor is any kind of driving tool capable of pushing or pulling tools in a well downhole, such as a Well Tractor^{®}.

Although the invention has been described above in connection with preferred embodiments of the invention, it will be evident to a person skilled in the art that several modifications are conceivable without departing from the invention as defined by the following claims.

## Claims

1. A fishing tool (100), comprising:
- at least two claws (110) configured for externally gripping a fish (200) located downhole,
- a moveable element (120) connected to at least one of the claws (110), and
- an electric actuator (140) connected to the moveable element (120) and configured to move the moveable element (120) reciprocally between a first position (p1) corresponding to a fully open position (O) of the claws (110) and a second position (p2) corresponding to a fully closed position (C) of the claws (110).

2. The fishing tool (100) according to claim 1, wherein the moveable element (120) is an axially moveable element, and wherein the first and second positions (p1, p2) are axial positions.

3. The fishing tool (100) according to claim 1 or 2, comprising two claws (110), each claw (110) being connected to a center point (cp) of the moveable element (120).

4. The fishing tool (100) according to claim 1 or 2, comprising three claws (110), each claw (110) being connected at an offset distance (d) from a center point (cp) of the moveable element (120)

5. The fishing tool (100) according to any of the preceding claims, wherein each position (p) of the moveable element (120) between the first position (p1) and the second position (p2) corresponds to a degree of closure of the claws (110).

6. The fishing tool (100) according to claim 5, further comprising a sensor (130) configured to determine when the claws (110) have gripped the fish (200) based on the position (p) of the moveable element (120).

7. The fishing tool (100) according to claim 6, wherein the sensor (130) is arranged to determine the position (p) of the moveable element (120) directly on the moveable element (120) or on one or more keys (148) connected to the moveable element (120).

8. The fishing tool (100) according to any of the preceding claims, wherein the fishing tool (100) is configured to be connected to a wireline (20).

9. The fishing tool (100) according to any of the preceding claims, wherein the electric actuator (140) is an electric rotary motor, and wherein the moveable element (120) is connected to the electric rotary motor (140) by a rotary-to-linear converter (180), preferably in the form of a screw-and-nut mechanism.

10. The fishing tool (100) according to claim 6 and 9, wherein the sensor (130) is configured to determine the position (p) of the moveable element (120) by measuring a rotational position of the electric rotary motor (140) or of a rotating shaft (145) connected to the electric rotary motor (140).

11. The fishing tool (100) according to any of the preceding claims, wherein the electric actuator (140) is configured to receive power from a wireline (20) connected to the fishing tool (100) and/or a battery (150) arranged in the fishing tool (100).

12. The fishing tool (100) according to any of the previous claims, wherein the moveable element (120) is biased towards the first position (p1) or towards the second position (p2).

13. A method (300) for providing a fishing tool (100), comprising:
- providing (302) a moveable element (120) being reciprocally moveable within the fishing tool (100) between a first position (p1) and a second position (p2), and
- connecting (304) at least two claws (110) to the moveable element (120) such that the claws (110) are configured for externally gripping a fish (200) and be in a fully open position (O) when the moveable element (120) is in the first position (p1) and in a fully closed position (C) when the moveable element (120) is in the second position (p2).

14. A method (400) for operating a fishing tool (100), comprising:
- providing an electric actuator (140),
- providing (402) the fishing tool (100) according to the method (300) of claim 13,
- externally gripping (404) a downhole fish (200) with the fishing tool (100), and
- extracting (406) the fishing tool (100) and the externally gripped fish (200) from downhole.
